# EUROPÄISCHE PATENTSCHRIFT

(11) **EP 0 702 767 B1**
(45) Veröffentlichungstag und Bekanntmachung des Hinweises auf die Patenterteilung: **16.07.1997**
(21) Anmeldenummer: 95909087.9
(22) Anmeldetag: 09.03.1995
(51) Int. Cl.: F16L 55/16

(54) **VORRICHTUNG UND VERFAHREN ZUR RENOVIERUNG VON ANSCHLÜSSEN**
DEVICE AND METHOD OF RENOVATING CONNECTIONS
DISPOSITIF ET PROCEDE DE REFECTION DE RACCORDS

(30) Priorität: 31.03.1994 CH 977/94
(43) Veröffentlichungstag der Anmeldung: 27.03.1996
(73) Patentinhaber: KA-TE System AG, CH-8041 Zürich (CH)
(72) Erfinder: Lieb, Andreas, CH-8047 Zürich (CH)
(74) Vertreter: Patentanwälte Schaad, Balass, Menzl & Partner AG
(86) Internationale Anmeldenummer: IB9500146
(87) Internationale Veröffentlichungsnummer: WO9527167

(56) Entgegenhaltungen:
- EP-A- 0 423 640
- EP-A- 0 533 999
- EP-A- 0 674 132
- WO-A-91/08417
- WO-A-91/15705
- DE-A- 3 618 963
- DE-A- 4 207 038
- DE-C- 3 938 390
- GB-A- 2 147 682
- US-A- 3 950 461

## Beschreibung

Die hier beschriebene Erfindung betrifft eine Schalungs-Manschette und ein Verfahren zur Erneuerung bzw. Verschliessung von in eine Hauptleitung eintretenden Anschlussleitungen; in der Fachsprache wird der genannte Erneuerungs-Vorgang auch als Einbinden bzw. Wieder-Einbinden der Anschlussleitung in das Rohrleitungsnetz bezeichnet.

Die genannten Arbeiten beziehen sich auf die Renovierung von Anschlüssen, d.h. von Ein- und Austrittstellen von Anschlussleitungen in bzw. aus Hauptleitungen. Die letzteren können Abwasserkanäle und sonstige flüssigkeits- oder gasführende Hauptleitungen sein; wichtige Anschlussleitungen sind beispielsweise Haus-Abwasserleitungen.

Die ältere EP-A-0 674 132 (Stand der Technik gemäß Artikel 54(3) EPÜ) offenbart eine Einrichtung und ein Verfahren zum Abdichten einer Einmündungsstelle einer Rohrleitung in eine Sammelrohrleitung. An einem rohrleitungsgängigen Roboter mit einer Fernsehkamera ist ein Abdichtmittelbehälter angeordnet, der eine in radialer Richtung aus- und einfahrbare Einrichtung zum abkoppelbaren Halten einer Schalung trägt. An der Schalung sind zwei Druckluftzylinder angeordnet, deren mit Abstützflächen versehene Kolbenstangen mittels Druckluft ausfahrbar sind, um die abgekoppelte Schalung an der Sammelrohrinnenwand abzustützen und in ihrer Position zu halten.

Weiter beschreibt die WO 91/08417 einen ferngesteuerten Schalungseinbau in nichtbegehbare Rohr-Verzweigungen und -Einmündungen. Die dabei eingesetzte verlorene Schalung besteht aus einem grundsätzlich nicht elastischen Material, sodass die zur Renovation notwendige Abdichtung nicht jedenfalls erreicht werden kann.

Auch das zu analogen Arbeiten verwendete Verbindungselement gemäss der WO 91/15705 besteht aus einem relativ formsteifen oder höchstens biegeelastischen Material. Die dazugehörige Hüllenwand ist zwar elastisch, der darin aushärtende Mörtel kommt jedoch nicht direkt mit der Anschlussleitung und dem Erdreich in Kontakt, wodurch sich die Möglichkeit einer Kontraktion und somit einer Undichtheit ergibt. Zudem ragt der Flansch des genannten Verbindungselementes zusammen mit dem dahinter abbindenen Mörtelkragen relativ weit in die Hauptleitung hinein, was zu ungünstigen Strömungs- und Ablaufbedingungen führt.

Demgegenüber erlauben es die erfindungsgemässe Schalungs-Manschette und das erfindungsgemässe Verfahren in einer auch vom Fachmann nicht ohne weiteres voraussehbaren Kombination in praktisch allen Fällen sowohl eine genügende Abdichtung wie auch eine Renovation ohne verlorene Einsetz-Elemente zu schaffen.

Die erfindungsgemässe, in der Renovierung von Anschlüssen, bevorzugterweise von solchen in Abwasserkanälen, einzusetzende formstabile aber biegeelastische Schalungs-Manschette zur Verschalung der Hauptleitungen bei Reparatur- bzw. Verschliessungsarbeiten von Anschlüssen von Anschlussleitungen in die Rohrhauptleitungen, bevorzugterweise in Abwasserkanälen, ist im Anspruch 1 definiert.

Die gleiche Schalungs-Manschette besteht vorzugsweise entweder aus einem durchscheinenden, gegebenenfalls armierten, speziell faserverstärkten Polymermaterial, bevorzugterweise aus einem Polycarbonat, einem Polyterephthalat oder einem Polyamid bzw. -imid, speziell bevorzugterweise aus einem Polyamid 6-PA bis 12-PA, und weist vorzugsweise eine Wandstärke von 0,2 bis 4 mm auf, oder sie ist aus elastischem Material aufgebaut.

Dabei ist wesentlich, dass die Riementeile auf mindestens einer Flächen- bzw. Kantenseite gelocht, gezahnt, aufgerauht oder mit einem die Haftung verbessernden Belag belegt sind und dass die entsprechenden Seiten in/an den Führungen entsprechend ausgebildet sind.

Auch müssen die Riementeile in den Führungen in zwei Endstellungen zu bringen sein, wobei in der einen Endstellung die speziell ausgeformten bzw. oberflächenbehandelten Seiten der Riementeile und der Führungen nicht miteinander in Kontakt stehen und die Riementeile relativ zu den Führungen bewegt werden können und wobei in der anderen Endstellung die genannten Seiten in Kontakt stehen und die Riernenteile relativ zu den Führungen nicht bewegbar, d.h. fixiert, sind.

Die genannte Schalungs-Manschette weist weiter die zur Arbeitsausführung notwendigen Aussparungen sowie Halterungs- und Fixierungs-Oeffnungen, -Aussparungen oder -Ausformungen sowie, gegebenenfalls, einen Wärmetauscher und/oder elektrische Heizdrähte zum Aufwärmen des Mörels auf.

Eine in der Renovierung von Anschlüssen, bevorzugterweise von solchen in Abwasserkanälen, einzusetzende dehnbare Gummiblase zum zeitweiligen Abdichten bei Reparaturen bzw. Verschliessungen von Aschlüssen in die Hauptleitung weist
- einen auf die Fluidzufiihrstelle bezogenen äusseren Teil mit technisch genügend gleichmässiger Wandstärke,
- einen mittleren Teil mit verstärkter und gegebenenfalls ungleichmässiger Wandstärke bzw. Armierung und
- einen die Fluidzuführstelle enthaltenden Teil mit wiederum gleichmässiger Wandstärke auf,
wobei die dehnbare Gummiblase gegebenenfalls eine durchgehend freie Durchtrittsleitung vom äusseren zum die Fluidzuführstelle enthaltenden Teil aufweist.

Bevorzugterweise wird bei der genannten dehnbaren Gummiblase die Verstärkung und/oder die ungleichmässige Wandstärke des mittleren Teils durch eine zusätzliche, auf eine unverstärkte Gummiblase aufzuziehende und gegebenenfalls darauf zu befestigende Gummimanschette geschaffen.

Die genannte Gummiblase kann weiter getrennte Eintritts- und Austrittsstellen für das Druckfluid aufweisen; dieses kann dann-gegebenenfalls unter Erwärmung - zirkuliert werden.

Eine in der Renovierung von Anschlüssen, insbesondere solchen in Abwasserkanälten, einzusetzende Vorrichtung zum Setzen und gegebenenfalls Wieder-Entfernen der oben spezifizierten Schalungs-Manschette und dehnbaren Gummiblase ist gekennzeichnet
- durch bevorzugterweise radial aus- und einfahrbare, ein- und ausklinkbare Halterungseinrichtungen zur Aufnahme der Schalungs-Manschette,
- durch Einrichtungen zur Positionierung der Riementeile der gehaltenen Schalungs-Manschette in einer der genannten beiden Endstellungen hinsichtlich der Führungen und
- durch Einrichtungen zum Ein- bzw. Ausziehen der Riementeile in die / aus den Führungen in der diese Bewegung erlaubenden Endstellung der Riementeile,
sowie
- durch ein- und ausfahrbare Halterungseinrichtungen für die dehnbare Gummiblase und
- durch eine gegebenenfalls in die genannte Halterungseinrichtung integrierte Zu- bzw. Ableitung des Druckfluidums zum Ausdehnen bzw. Druckfreimachen der Gummiblase.

Wichtig dabei ist, dass die genannte Vorrichtung auf einen rohrleitungs-, speziell kanalgängigen Roboter mit Fernsehkamera aufbringbar ist, dass sie am Roboter vorzugsweise um die Kanal achse drehbar angeordnet ist und dass sie bzw. die Einrichtungen darin vom Roboter steuerimpuls-, energie- und materialmässig gespiesen wird/werden.

Schliesslich ist das ebenfalls erfindungsgemässe Verfahren zur Ausführung von Reparaturen bzw. Verschliessungen von Anschlüssen von Anschlussleitungen in Rohrhauptleitungen nach dem Ausbohren bzw. -fräsen des defekten Anschlusses und gegebenenfalls des Reliningschlauches an der Stelle des Seitenanschlusses im Anspruch 6 angegeben.

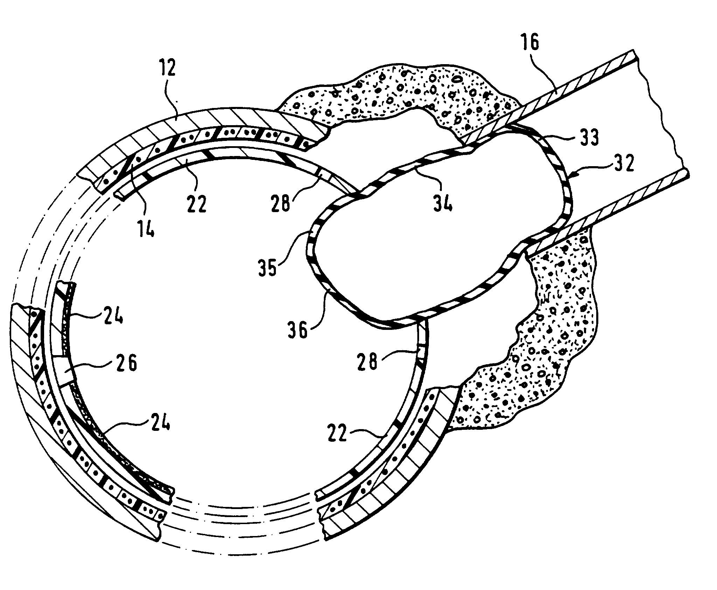

Die erfindungsgemässe Schalungs-Manschette und das erfindungsgemässe Verfahren werden nun anhand der weiter hinten folgenden einzigen Figur exemplifiziert. Die genannte Figur stellt schematisch und im Schnitt eine beispielhafte Anwendung der Erfindung dar.

Die mit 12 bezeichnete Schnittfläche einer Hauptleitung ist nur teilweise dargestellt. In ihr anliegend ist der ausgehärtete Relining-Schlauch 14.

Die von rechts oben seitlich in die Hauptleitung eintretende Anschlussleitung 16 ist, zusammen mit der undichten Eintrittsstelle in der Hauptleitung, vorgängig ausgebohrt oder -gefräst und gereinigt worden. Anschliessend ist die ebenfalls nur teilweise eingezeichnete Schalungs-Manschette 22 mit der in etwa auf der dem Leitungseintritt gegenüberliegenden Seite liegenden Führung 26 und dem darin fixierten Riementeil 24 in der Hauptleitung positioniert worden. Nahe bei der Aussparung für die dehnbare Gummiblase 32 sind in der Schalungs-Manschette die Bohrungen 28 zum Einpressen des aushärtenden, evtl. auch elastischen Mörtels, vorzugsweise Epoximörtels vorgesehen.

Als nächstes wird die dehnbare Gummiblase 32 eingesetzt und ausgedehnt. Der von der Hauptleitung aus gesehen äussere Teil 33 ragt genügend weit in die Anschlussleitung hinein, der mittlere, verstärkte und eventuell gebogene Teil 34 überbrückt den Bereich zwischen dem Ende der Anschlussleitung und der Aussparung in der Schalungs-Manschette, und der innere Teil 35 mit der Ansatzstelle 36 für die Druckfluidzuführung und gleichzeitig Halterung befindet sich grösstenteils innerhalb der Hauptleitung.

Durch das Ende der Anschlussleitung, durch das äussere Erdreich, durch die Aussenwand des mittleren Gummiblasenteils und durch den diesen Blasenteil umgebenden äusseren Abschnitt der Schalungs-Manschette wird somit ein genügend sicher abgegrenzter Raum geschaffen, in den - nach entsprechendem Umrüsten des Roboters - der aushärtende, evtl. auch elastische Mörtel, vorzugsweise Epoximörtel eingepresst wird. Dies geschieht durch die Bohrungen 28.

Sollte das erfindungsgemässe Verfahren zum vorübergehenden oder endgültigen Verschliessen der Eintrittsstelle einer Anschlussleitung in die Hauptleitung angewandt werden, so wird eine Schalungs-Manschette ohne Aussparung und mit nur Bohrungen 28 nach Plazieren einer dehnbaren Gummiblase weiter aussen gesetzt und der so abgegrenzte Raum mit dem Mörtel aufgefüllt.

Nach dem Abbinden bzw. nach Erreichen der gesuchten Endviskosität des Mörtels wird (im Falle der Renovation) sowohl die Schalungs-Manschette (durch Aufnehmen derselben in die Halterungseinrichtung der Vorrichtung und durch Verringerung des Durchmessers der Schalung) wie auch die dehnbare Gummiblase (durch Zerstörung oder durch Druckfreimachen) von der Reparaturstelle entfernt. Nötigenfalls kann das Abbinden des Mörtels durch Erwärmen, speziell entweder mittels durch den Wärmetauscher in der Schalungs-Manschette oder in der Gummiblase zirkulierendes Wärmwasser oder mittels der elektrischen Heizdrähte in der Schalungs-Manschette,beschleunigt werden.

Die eingesetzte dehnbare Gummiblase kann eine durchgehende innere Leitung aus einem relativ festen Material enthalten, sodass eine freie Durchflussmöglichkeit durch die genannte Gummiblase gegeben ist. Dies ermöglicht die Einbindung auch von flüssigkeitsführenden Anschlussleitungen.

## Patentansprüche

1. In der Leitungsrenovierung einzusetzende formstabile aber biegeelastische Schalungs-Manschette zur Verschalung der Rohrhauptleitungen bei Reparaturen bzw. Verschliessungen von Anschlüssen von Anschlussleitungen an die Rohrhauptleitungen, insbesondere in Abwasserkanälen, mit
- einem flächenförmigen, vorzugsweise rechteckigen Teil (22),
- einem sich von einer Aussenpartie einer Seite des flächenförmigen Teils (22) erstreckenden Riementeil (24), der auf mindestens einer Flächen- bzw. Kantenseite gelocht, gezahnt, aufgerauht oder mit einem die Haftung verbessernden Belag belegt ist,
- einer auf der der Aussenpartie entgegengesetzten Seite des flächenförmigen Teils (22) angebrachten Führung (26) zur Aufnahme des Riementeils (24) und Befestigung des Riementeils (24) in unterschiedlichen Positionen, wobei die entsprechende Seite der Führung (26) zur Befestigung des Riementeils (24) entsprechend der Flächen- bzw. Kantenseite des Riementeils ausgebildet ist, und
- Halterungs- und Fixierungs-Oeffnungen, -Aussparungen oder Ausformungen, die dazu bestimmt sind, mit einer zum ausklinkbaren Halten der Schalungs-Manschette bestimmten Halterungseinrichtung einer an einem rohrleitungs- bzw. kanalgängigen Roboter angeordneten Vorrichtung zum Setzen und gegebenenfalls Wiederentfernen der Schalungs-Manschette zusammenzuwirken, wobei
- der Riementeil (24) bezüglich der betreffenden Seite der Führung (26) in zwei Endstellungen bringbar ist, wobei in der einen der Endstellungen die speziell ausgeformten bzw. oberflächenbehandelten Seiten des Riementeils (24) und der Führung (26) nicht miteinander in Kontakt stehen und der Riementeil (24) relativ zur Führung (26) bewegt werden kann, und in der andern der Endstellungen die genannten Seiten in Kontakt stehen und der Riementeil (24) relativ zur Führung (26) fixiert ist,
- und nach dem Durchführen durch die und dem Befestigen in der Führung (26) die geschlossene Manschette erhalten wird.

2. Schalungs-Manschette nach Anspruch 1, gekennzeichnet durch mehrere Riementeile (24) und entsprechende Führungen (26).

3. Schalungs-Manschette nach Anspruch 1 oder 2, gekennzeichnet durch zur Arbeitsausführung notwendige Aussparungen (28) und gegebenenfalls einen Wärmetauscher und/oder elektrische Heizdrähte zum Aufwärmen eines in die Reparaturstelle eingebrachten Mörtels.

4. Schalungs-Manschette nach einem der Ansprüche 1 bis 3, dadurch gekennzeichnet, dass sie aus einem durchscheinenden, gegebenenfalls armierten, insbesondere faserverstärkten Polymermaterial, vorzugsweise aus einem Polycarbonat, einem Polyterephthalat oder einem Polyamid 6-PA bis 12-PA, besteht und eine Wandstärke von 0,2 bis 4 mm aufweist.

5. Schalungs-Manschette nach einem der Ansprüche 1 bis 4, dadurch gekennzeichnet, dass der flächenförmige Teil (22) eine Aussparung für eine dehnbare Gummiblase (32) aufweist.

6. Verfahren zum Ausführen von Renovierungen bzw. Verschliessungen von Anschlüssen von Anschlussleitungen in Rohrhauptleitungen, insbesondere in einem Abwasserkanal, nach dem Ausbohren bzw. Ausfräsen des defekten Anschlusses und gegebenenfalls des Reliningschlauches an der Stelle des Anschlusses, mit folgenden Verfahrens-Hauptschritten
- Einfahren und Setzen, mit Einsatz einer Halterungseinrichtung, einer Schalungs-Manschette gemäss Anspruch 5 mit einer der Anschlussöffnung entsprechenden Aussparung und Bohrungen (28) für die Einspeisung eines aushärtenden, evtl. auch elastischen Mörtels, vorzugsweise Epoxi-Mörtels in der Hauptleitung (12) durch Positionierung der Schalungs-Manschette an der Arbeitsstelle, durch Ausdehnung der Schalungs-Manschette mittels Bewegung und Fixierung des Riementeils (24) bis zur Anpassung an die Rohrleitungs-Innenwand und durch Ausklinken der Schalungs-Manschette von der Halterungseinrichtung,
- Einfahren einer dehnbaren Gummiblase (32), die einen auf eine Fluidzuführstelle (36) bezogenen äusseren Teil (33) mit technisch genügend gleichmässiger Wandstärke, einen mittleren Teil (34) mit verstärkter und gegebenenfalls ungleichmässiger Wandstärke bzw. Armierung und einen die Fluidzuführstelle enthaltenden Teil (35) mit wiederum gleichmässiger Wandstärke aufweist, derart, dass deren äusserer Teil (33) in den intakten Teil der Anschlussleitung (16), deren mittlerer Teil (34) zwischen die Anschlussleitung (16) und die Aussparung in der Schalungs-Manschette und deren die Fluidzuführstelle (36) enthaltender Teil (35) in die genannte Aussparung sowie in die Hauptleitung (12) zu liegen kommen,
- Ausdehnen und Setzen der genannten dehnbaren Gummiblase (32), derart, dass sie einen Raum entweder zwischen dem ausgebohrten Ende der Anschlussleitung (16), der Aussparung in der Schalungs-Manschette und dem umgebenden Erdreich oder, bei abgefrästen, vorher vorstehenden Anschlussleitungen (16), ohne Erdreich abgrenzt, welcher Raum anschliessend mittels eines aushärtenden, evtl auch elastischen Mörtels, vorzugsweise Epoxi-Mörtels ausgefüllt wird und - nach dem Abbinden des Mörtels -
- gegebenenfalls Entfernen und Ausfahren sowohl der Schalungs-Manschette wie auch der entspannten dehnbaren Gummiblase.

## Claims

1. Shuttering sleeve for use in pipeline renovation, that is dimensionally stable but elastically flexible, for encasing main pipelines during repairs and operations to seal connections of connection pipes to the main pipelines, in particular sewers, having
- a flat, preferably rectangular part (22),
- a belt part (24) which extends from an outer part of one side of the flat part (22), is perforated, toothed or roughened on at least one surface or edge side, or is covered with a coating which improves the adhesion,
- a guide (26) which is fitted on the side of the flat part (22) opposite the outer part to accommodate the belt part (24) and to secure the belt part (24) in different positions, the corresponding side of the guide (26) being designed to secure the belt part (24) corresponding to the surface or edge side of the belt part, and
- holding and fixing openings, cutouts or molded recesses which are intended to interact with a holding device, which is intended to hold the shuttering sleeve such that it can be unlatched, of an apparatus, which is arranged on a robot which can move through the pipeline or sewer in order to seat and, if required, to remove the shuttering sleeve again,
- it being possible to move the belt part (24) into two limit positions with respect to the relevant side of the guide (26), the specially molded or surface-treated sides of the belt part (24) and of the guide (26) not coming into contact with one another, and it being possible to move the belt part (24) relative to the guide (26), in one of the limit positions, and the said sides being in contact and the belt part (24) being fixed relative to the guide (26) in the other limit position,
- and the closed sleeve being preserved after passing through the guide (26) and after being secured in the guide (26).

2. Shuttering sleeve according to Claim 1, characterized by a plurality of belt parts (24) and corresponding guides (26).

3. Shuttering sleeve according to Claim 1 or 2, characterized by cutouts (28) which are required to carry out the work and, if required, by a heat exchanger and/or electrical heating wires for heating up a mortar which is introduced into the repair point.

4. Shuttering sleeve according to one of Claims 1 to 3, wherein said shuttering sleeve is composed of a translucent, possibly reinforced, in particular fiber-reinforced, polymer material, preferably of a polycarbonate, a polyterephthalate or a polyamide 6-PA to 12-PA and has a wall thickness of 0.2 to 4 mm.

5. Shuttering sleeve according to one of Claims 1 to 4, wherein the flat part (22) has a cutout for an expandable rubber bulb (32).

6. Method for carrying out renovations and operations to seal connections of connection pipes in main pipelines, in particular in a sewer, after the defective connection and possibly the relining hose at the point of the connection have been drilled or milled out, having the following main method steps:
- introduction and seating, using a holding device, of a shuttering sleeve according to Claim 5 having a cutout, which corresponds to the connection opening, and having holes (28) for feeding in a curing mortar which is possibly also elastic, preferably epoxy mortar, in the main pipe (12) by positioning the shuttering sleeve at the work point, by expansion of the shuttering sleeve by means of movement and fixing of the belt part (24) until it matches the pipeline inner wall, and by unlatching the shuttering sleeve from the holding device,
- introduction of an expandable rubber bulb which has in respect of a fluid supply point (36) an outer part (33) having a technically sufficiently uniform wall thickness, a middle part with a reinforced and possibly non-uniform wall thickness or reinforcement, and a part (35) which contains the fluid supply point and once again has a uniform wall thickness, in such a manner that its outer part (33) comes to rest in the intact part of the connection pipe (16), its middle part (34) comes to rest between the connection pipe (16) and the cutout in the shuttering sleeve, and its part (35) which contains the fluid supply point (36) comes to rest in the said cutout and in the main pipe (12),
- expansion and seating of the said expandable rubber bulb (32) in such a manner that it bounds a space either between the drilled-out end of the connection pipe (16), of the cutout in the shuttering sleeve and the surrounding earth or, in the case of milled-away previously projecting connection pipes (16), without the earth, which space is subsequently filled by means of a curing mortar which is possibly also elastic, preferably epoxy mortar, and - after the mortar has set -
- possible removal and extraction of both the shuttering sleeve and the expandable rubber bulb with the pressure removed.

## Revendications

1. Manchon de revêtement de forme stable mais élastique à la flexion, à utiliser dans la réfection de conduites pour le revêtement des canalisations principales lors de réparations ou d'obturations de raccords de branchements sur les canalisations principales, en particulier dans les égouts, comportant
- une partie en forme de surface de préférence rectangulaire (22),
- une partie courroie (24) qui s'étend à partir d'une partie extérieure d'un côté de la partie en forme de surface (22) et est, sur au moins un côté de surface ou de bord, perforée, dentée, rendue rugueuse ou pourvue d'un revêtement améliorant l'adhérence,
- un guidage (26) placé sur le côté de la partie en forme de surface (22) opposé à la partie extérieure et destiné à recevoir la partie courroie (24) et à la fixation de celle-ci dans différentes positions, le côté correspondant de ce guidage (26) pour la fixation de la partie courroie (24) étant fait d'une façon correspondant au côté de surface ou de bord de la partie courroie, et
- des ouvertures, évidements ou creux de support et de fixation qui sont destinés à coopérer avec un dispositif de support, destiné à la fixation décliquetable du manchon de revêtement, d'un appareil placé sur un robot allant dans la canalisation pour la pose et éventuellement l'enlèvement du manchon de revêtement,
- la partie courroie (24) pouvant, par rapport au côté considéré du guidage (26), être mise dans deux positions extrêmes, dans une desquelles les côtés de forme spéciale ou traités superficiellement de la partie courroie (24) et du guidage (26) ne sont pas en contact entre eux et la partie courroie (24) peut être déplacée par rapport au guidage (26), et dans l'autre desquelles ces côtés sont en contact et la partie courroie (24) est fixée par rapport au guidage (26), - et après le passage dans le guidage (26) et la fixation dans celui-ci étant obtenu le manchon fermé.

2. Manchon de revêtement selon la revendication 1, caractérisé par plusieurs parties courroie (24) et guidages correspondants (26).

3. Manchon de revêtement selon l'une des revendications 1 et 2, caractérisé par des évidements (28) nécessaires à l'exécution du travail et éventuellement un échangeur de chaleur et/ou des fils électriques chauffants pour le chauffage d'un mortier introduit à l'endroit de la réparation.

4. Manchon de revêtement selon l'une des revendications 1 à 3, caractérisé par le fait qu'il est constitué d'une matière polymérique translucide éventuellement armée, en particulier renforcée par des fibres, de préférence d'un polycarbonate, d'un polytéréphtalate ou d'un polyamide 6-PA à 12-PA, et a une épaisseur de paroi de 0,2 à 4 mm.

5. Manchon de revêtement selon l'une des revendications 1 à 4, caractérisé en ce que la partie en forme de surface (22) présente un évidement pour une vessie dilatable en caoutchouc (32).

6. Procédé d'exécution de réfections ou d'obturations de raccords de branchements dans des canalisations principales, en particulier dans un égout, après alésage ou fraisage du raccord défectueux et éventuellement de la gaine de rechemisage à l'endroit du raccord, comprenant les étapes principales suivantes :
- introduction et pose, au moyen d'un dispositif de support, d'un manchon de revêtement selon la revendication 5 ayant un évidement correspondant à l'ouverture du raccord et des trous (28) pour l'introduction d'un mortier durcissable éventuellement élastique, de préférence d'un mortier d'époxy, dans la conduite principale (12) par positionnement du manchon de revêtement à l'emplacement de travail, par dilatation du manchon de revêtement par déplacement et fixation de la partie courroie (24) jusqu'à adaptation à la paroi intérieure de la canalisation et par décliquetage du manchon de revêtement du dispositif de support,
- introduction d'une vessie dilatable en caoutchouc (32) qui présente une partie extérieure (33) en rapport avec un endroit d'amenée de fluide (36) et d'épaisseur de paroi suffisamment uniforme techniquement, une partie médiane (34) ayant une épaisseur de paroi renforcée et éventuellement irrégulière ou une armature, et une partie (35) contenant l'endroit d'amenée de fluide et de nouveau d'épaisseur de paroi uniforme, de façon telle que sa partie extérieure (33) vienne se placer dans la partie intacte du branchement (16), sa partie médiane (34) vienne se placer entre le branchement (16) et l'évidement du manchon de revêtement, et sa partie (35) contenant l'endroit d'amenée de fluide (36) vienne se placer dans l'évidement précité et dans la canalisation principale (12),
- dilatation et pose de la vessie dilatable en caoutchouc précitée (32) de façon telle qu'elle délimite un espace soit entre l'extrémité alésée du branchement (16), l'évidement du manchon de revêtement et le sol environnant, soit, dans le cas de branchements (16) préalablement saillants fraisés, sans sol, lequel espace est ensuite rempli d'un mortier durcissable éventuellement élastique, de préférence d'un mortier d'époxy, et, après la prise de ce mortier,
- éventuellement enlèvement et sortie à la fois du manchon de revêtement et de la vessie dilatable en caoutchouc détendue.
